# EUROPEAN PATENT APPLICATION

(11) **EP 2 672 363 A2**
(43) Date of publication of application: **11.12.2013**
(21) Application number: 13165653.0
(22) Date of filing: 26.04.2013
(51) Int. Cl.: G06F 3/01, G06F 3/041

(54) **Display device and method using a plurality of display panels**

(30) Priority: 26.04.2012 KR 20120043812
(71) Applicant: Samsung Electronics Co., Ltd, Gyeonggi-do 443-742 (KR)
(72) Inventor: Kim, Po-Ra, 443-742 Gyeonggi-do (KR); Lee, Jeong-Seok, 443-742 Gyeonggi-do (KR); Yun, In-Kuk, 443-742 Gyeonggi-do (KR)
(74) Representative: Birchenough, Lewis

(57) **Abstract**

A display device including a plurality of display panels and one or more vibration sensors for detecting a vibration by a touch of an input device. The vibration sensors are attached to the plurality of display panels The display device also includes a controller for, when one of the plurality of display panels is touched by the input device, identifying the display panel touched by the input device from the plurality of display panels according to vibration intensities detected by one or more vibration sensors. A display panel on which an input by an electronic pen is performed among multiple display panels can be identified through vibration intensities, so that input position detection using pattern recognition can be achieved even when the plurality of display panels are used.

## Description

### BACKGROUND OF THE INVENTION

### 1. Field of the Invention

The present invention relates generally to a display device, display system, and method thereof, and more particularly, to a display device and display system using a plurality of display panels and method thereof.

### 2. Description of the Related Art

With recent developments in display technologies, display devices have been developed that provide an input function for recognizing a touch position of an object, for example a finger or a pen, on a screen and for generating an input according to the recognized position, as well as providing a display function for displaying an image on the screen.

One example of an input function of a display device is a function for sensing a position of an input object (e.g. a pen) on a display screen according to a technique using pattern recognition, and for generating an input according to the sensed position. More specifically, this technique uses (i) an input object (e.g. in the form of a pen or stylus and the like) having an image capturing device (e.g. a camera) installed therein (e.g. at a tip thereof), and (ii) a display screen having a pattern displayed thereon, or incorporated therein. The pattern is arranged such that the form of the pattern at each specific point provides position information (e.g. coordinate information) of each specific point. The pattern is detectable by the image capturing device, but may be invisible to a user. When the input object touches (or is close to) the display screen, the image capturing device captures one or more images of a portion of the pattern located at the position of the touch. The images are then analyzed (e.g. by a processor comprised in the input object) to extract the position information encoded in the pattern to determine the touch position. The determined touch position may then be communicated from the input object to the display device, for example using short-range wireless communication. The display device may use the determined touch position as an input to perform a function. This type of input object is sometimes referred to as a digital pen or electronic pen.

As can be understood from the above, certain techniques using pattern recognition involve photographing a pattern formed on a display panel using an input device including a camera, for example an electronic pen. The input device recognizes the pattern from the photographed image, detects a position of the input object corresponding to the recognized pattern, and generates an input according to the detected position value. The input technique described above using pattern recognition may be used in a wide variety of applications and fields, for example with an electronic bulletin board and the like, that is electronically readable.

However, the method described above using pattern recognition utilizes a pattern formed on a single display panel. Therefore, this type of method is limited in that only a coordinate value within the single display panel can be detected.

As screen sizes of display devices become larger, a demand for large sized display panels also increases. However, as the size of a display panel becomes larger, costs increase, so that a display panel configuration generated by combining a plurality of individual display panels are used in many cases. Using the pattern recognition technique described above, a display device incorporating a plurality of individual display panels can detect a position of an input within each of the plurality of display panels individually, but cannot detect the display panel into which the input is made among the plurality of display panels.

Accordingly, a display device including a plurality of display panels cannot effectively apply the pattern recognition technique descried above.

### SUMMARY OF THE INVENTION

It is an aim of certain embodiment of the present invention to address, solve, mitigate or obviate, at least partly, at least one of the problems and/or disadvantages associated with the related art, for example one or more of the problems and/or disadvantages described above. Certain embodiments aim to provide at least one of the advantages described below.

Accordingly, certain embodiments of the present invention provide a display device and method using a plurality of display panels which can detect an input position using a pattern recognition technique, even when the plurality of display panels are used.

Certain embodiments of the present invention provide a display device and method using a plurality of display panels which can detect a change in panel receiving an input, even when an input position is moved from a first display panel to a second display panel in the display device using the plurality of display panels.

In accordance with an aspect of the present invention, there is provided a display device comprising: a plurality of display panels; one or more vibration sensors for detecting a vibration caused by a touch of an input device, the vibration sensors being attached to at least one of the plurality of display panels; and a controller for, when one of the plurality of display panels is touched by the input device, selecting the display panel touched by the input device from the plurality of display panels according to vibration intensities detected by the one or more vibrations sensors.

In accordance with another aspect of the present invention, there is provided a display system comprising: a display device according to the above aspect; and an input device for calculating a coordinate value of a touch made by the input device on a display panel of the display device, wherein the coordinate value is calculated according to recognition of a pattern in an area of the display panel touched by the input device.

In accordance with another aspect of the present invention, there is provided a method for a display device comprising a plurality of display panels and one or more vibration sensors, the method comprising the steps of: detecting whether an input device touches one of the plurality of display panels; receiving vibration intensities detected by the one or more vibration sensors when the input device touches one of the plurality of display panels; and selecting the display panel touched by the input device from the plurality of display panels according to the received vibration intensities.

Another aspect of the present invention provides a computer program comprising instructions arranged, when executed, to implement a method, system and/or apparatus, in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description taken in conjunction with the accompanying drawings, in which:
FIG. 1 is a diagram illustrating a pattern formed in one of a plurality of display panels according to an embodiment of the present invention;
FIG. 2 is a diagram illustrating a display device including a plurality of display panels according to an embodiment of the present invention;
FIG. 3 is a diagram illustrating a display device including a plurality of display panels according to a first embodiment of the present invention;
FIG. 4 a diagram illustrating a configuration of the display device including the plurality of display panels according to the first embodiment of the present invention;
FIGs. 5A and 5B are flowcharts illustrating a method for using, by the display device, the plurality of panels according to the first embodiment of the present invention;
FIG. 6 is a diagram illustrating a display device including a plurality of display panels according to a second embodiment of the present invention;
FIG. 7 is a diagram illustrating a configuration of the display device including the plurality of display panels according to the second embodiment of the present invention; and
FIGs. 8A and 8B are flowcharts of operations of the display device including the plurality of display panels according to the second embodiment of the present invention.

### DETAILED DESCRIPTION OF EMBODIMENTS OF THE PRESENT INVENTION

Hereinafter, various exemplary embodiments of the present invention will be described with reference to the accompanying drawings. The following description is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

In the following description, and in the accompanying drawings, the same or similar elements may be designated by the same or similar reference numerals although they may be shown in different drawings. Further, various specific definitions found in the following description are provided only to help general understanding of the present invention, and it is apparent to those skilled in the art that the present invention can be implemented without such definitions. Further, in the following description of exemplary embodiments of the present invention, a detailed description of known processes, functions, structures, constructions and configurations may be omitted for clarity and conciseness and to avoid obscuring the subject matter of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a", "an" and "the" include plural referents unless the context dictates otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Embodiments of the present invention provide a display device, system and method using a plurality of display panels in which an input into one of the plurality of display panels by means of an input device (which, in the exemplary embodiments described hereinafter, is in the form of an "electronic pen") is detected using a pattern recognition technique. In particular, when an input by the electronic pen is performed, the display device, which includes the plurality of display panels, selects a display panel in which the input is performed according to a vibration (e.g. sound vibration) intensity detected by one or more vibration sensors, and calculates a position of the input on the selected display panel. Further, when a position (defined, for example, by one or more coordinate values) at which the electronic pen is located (e.g. the position at which the electronic pen touches a display panel) is changed by a drawing operation of a user, the display device selects a display panel in which the electronic pen is located by using a change of the coordinate (for example, x and/or y coordinates) value.

In embodiments of the present invention, the plurality of display panels may include any suitable type of display panel for providing or displaying a pattern, for example, a Liquid Crystal Display (LCD), a Plasma Display Panel (PDP), an Organic Light-Emitting Display (OLED), an electronic paper, and the like.

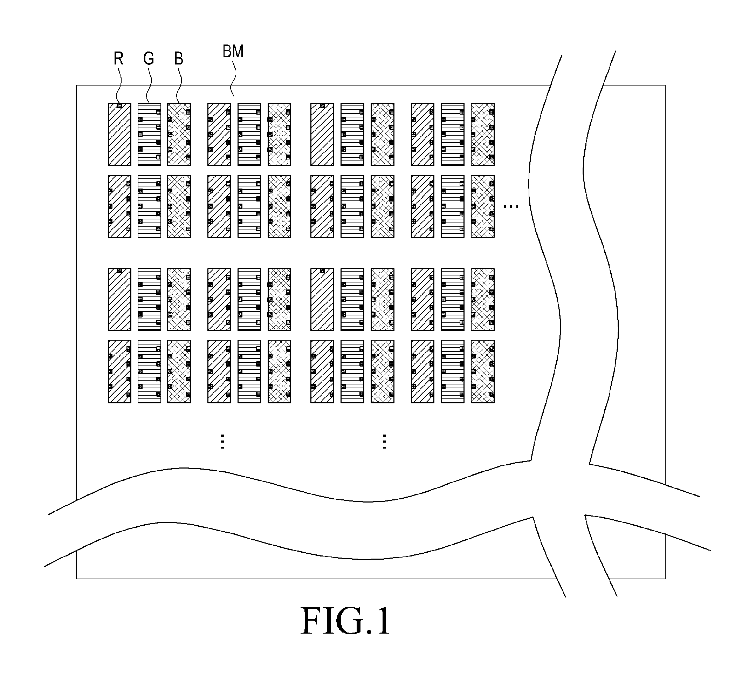

FIG. 1 is a diagram illustrating a pattern formed in or on one of plurality of display panels according to an embodiment of the present invention. FIG. 1 shows a display panel in which the pattern is formed to determine a position of a pixel by using sub pixels R, G, and B and a Black Matrix (BM). A BM is a layer commonly included in certain types of display panel. For example, a BM layer may be provided to prevent leakage of backlight between pixels to improve contrast of the display. Referring to FIG. 1, each of the sub pixels R, G, and B includes one or a plurality of holes in specific internal positions according to a predetermined pattern type in order to determine the position of the pixel. In this embodiment, the holes are formed in such a manner that black matrix regions are brought within and included in an area of each of the sub pixels R, G, and B, and the holes can be formed by the same materials as those of the black matrix regions. The holes may include other materials which can be recognized as the pattern in the R, G, and B areas and disposed in other positions.

As illustrated in FIG. 1, the pattern formed in the display panel is photographed by the electronic pen. The pattern is recognized from the photographed image, and then an input position of the electronic pen on the display panel is calculated. Since the pattern can be used to calculate only the position on the corresponding display panel, the display device calculates the position of the display panel among the multiple display panels by using vibration intensities or a change of the coordinate value where the electronic pen is located.

The following description addresses a case in which the display device includes a plurality of display panels having a pattern formed therein, for example as illustrated in FIG. 1.

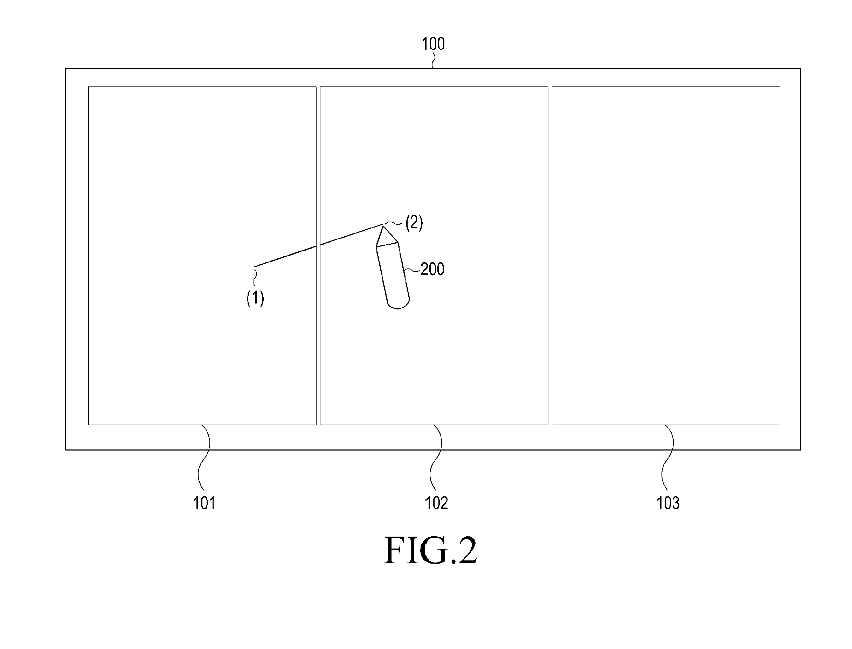

FIG. 2 is a diagram illustrating the display device including the plurality of display panels according to an embodiment of the present invention. Referring to FIG. 1, the display device 100 includes multiple display panels generated by connecting three display panels including a first display panel 101, a second display panel 102, a third display panel 103.

When an electronic pen 200 touches the first display panel 101 to perform an input, for example "-," the display device 100 detects a vibration intensity caused by the touch of the electronic pen 200 using one or more vibration sensors. Further, the display device 100 selects the first display panel 101 touched by the electronic pen 200 from the first to third display panels 101 to 103 according to the detected vibration intensity. In addition, the display device 100 detects a first position value corresponding to a first input position 1 of the electronic pen 200 on the selected first display panel 101 by using a coordinate value received from the electronic pen 200.

Further, when the electronic pen 200 moves from the first input position 1 to a second input position 2, according to a drawing action of the user while maintaining touch contact, the display device 100 selects a display panel in which the electronic pen 200 is located (e.g. a display panel which the electronic pen touches) by using a change in the coordinate value on a trace along which the electronic pen 200 has moved. For example, in a case where the first to third display panels 101 to 103 have position values (e.g. (X, Y) coordinates) within a range from (0, 0) to (1080, 1920), when a change in the X coordinate value of the electronic pen 200 is equal to or larger than a predetermined value of, for example, 1000, the display device 100 selects the second display panel 102 because the electronic pen 200 is moved to and located in the second display panel 102 in an X direction. Further, the display device 100 detects a second position value corresponding to the second input position 2 of the electronic pen 200 on the selected second display panel 102 by using a coordinate value received from the electronic pen 200.

As described above, the display device 100 detects which display panel is touched by the electronic pen 200 among the plurality of display panels 101 to 103 according to the vibration intensity generated as the electronic pen 200 touches the display panel (e.g. according to the relative levels of the vibration intensities measured by the vibration sensors, or based on the absolute levels of the vibration intensities measured by the vibration sensors). Further, the display device 100 detects which display panel has the changed input position, even when the input position of the electronic pen 200 is moved from one display panel to another display panel.

Configurations of a display device including a plurality of display panels according to various exemplary embodiments of the present invention as described above will now be described in more detail.

A display device may be implemented to include various configurations depending on the number of display panels, the number of vibration sensors, and a position of the vibration sensors on the display panels.

According to a first embodiment of the present invention, a display device includes a plurality of display panels formed by connecting three display panels, a center display panel having two vibration sensors. According to a second embodiment of the present invention, a display device includes a plurality of display panels formed by connecting three display panels, each of which includes a vibration sensor.

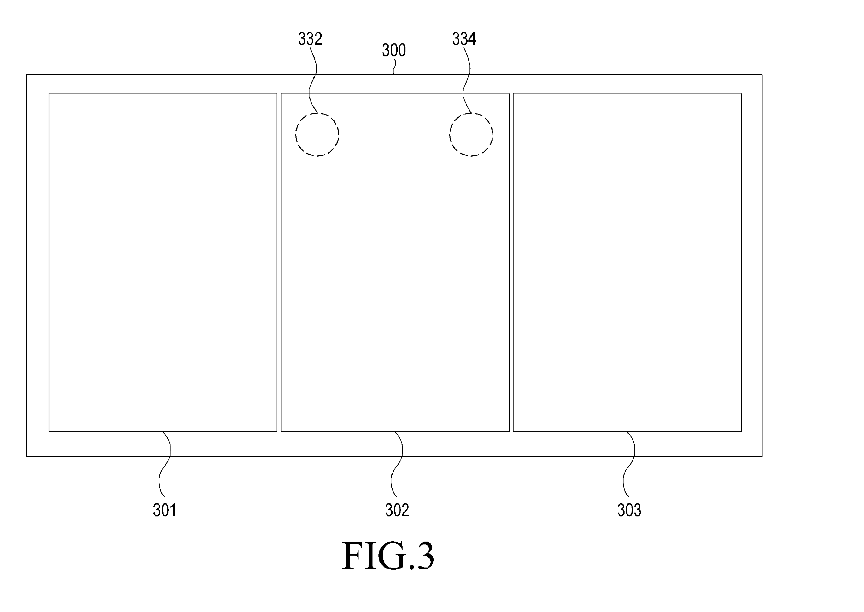

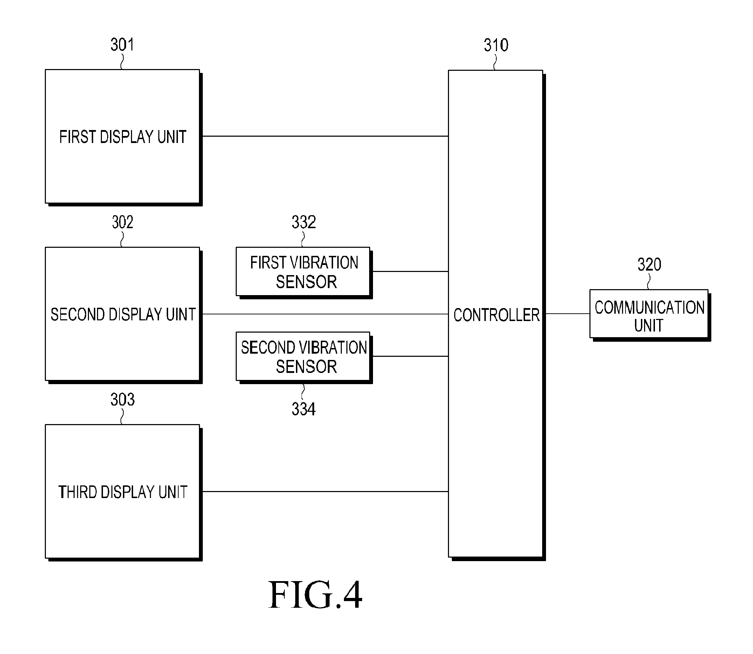

First, the display device using according to the first embodiment of the present invention will be described. FIG. 3 is a diagram illustrating the display device 300 including the plurality of display panels according to the first embodiment of the present invention. FIG. 4 is a diagram illustrating a configuration of the display device 300.

Referring to FIG. 3, the display device 300 according to the first embodiment of the present invention includes a plurality of display panels formed by connecting three display panels 301, 302, and 303. Two vibration sensors 332 and 334 may be attached to a surface (e.g. a rear surface) of the second display panel 302, which is at a center of the three display panels 301, 302, and 303.

Further, referring to FIG. 4, the display device 300 according to the first embodiment includes the first display panel 301, the second display panel 302, the third display panel 303, the first vibration sensor 332, the second vibration sensor 334, a controller 310, and a communication unit 320.

Each of the first display panel 301, the second display panel 302, and the third display panel 303 includes a pattern (for example having a form as illustrated in FIG. 1), detects a touch of the electronic pen 200 according to any suitable technique (for example according to a frequency (e.g. sound frequency) characteristic generated by the touch of the electronic pen 200), and transmits the detection to the controller 310.

In this embodiment, the first vibration sensor 332 and the second vibration sensor 334 are attached to upper left and upper right sides, respectively, of the rear surface of the second display panel 302, which corresponds to the center display panel. The first vibration sensor 332 and the second vibration sensor 334 each detect a vibration (e.g. sound vibration) generated as the electronic pen 200 touches one of the first to third display panels 301 to 303, and each transmits an intensity of the detected vibration to the controller 310.

The controller 310 receives a signal corresponding to a presence of the touch of the electronic pen 200 from one of the first to third display panels 301 to 303 and determines the existence or nonexistence of the touch of the electronic pen 200. When the electronic pen 200 touches a display panel, the controller 310 selects the display panel touched by the electronic pen 200 from the first to third display panels 301 to 303 according to the vibration intensities received from the first vibration sensor 332 and the second vibration sensor 334.

Further, the controller 310 calculates an input position on the selected display panel by using a coordinate value of the electronic pen 200 received through the communication unit 320. In addition, when an input position changes according to a drawing action of the user while the electronic pen 200 is touching, the controller 200 selects the display panel in which the electronic pen 200 is located after the input position change by using a change in the coordinate value (e.g. x coordinate) on a trace along which the electronic pen 200 has moved.

The communication unit 320 may be implemented by, for example, any suitable type of wired or wireless communication module, for example a ZigBee module and the like, and may receive a coordinate value from the electronic pen 200. At this time, when an input is performed as the electronic pen 200 touches or approaches one of the first to third display panels 301 to 303, the electronic pen 200 photographs a pattern formed in a corresponding input position, recognizes the pattern from the photographed pattern image, and calculates a corresponding coordinate value. Subsequently, the electronic pen 200 transmits the calculated coordinate value to the display device 300.

An operation of the display device 300 according to the first embodiment of the present invention as described above will now be described.

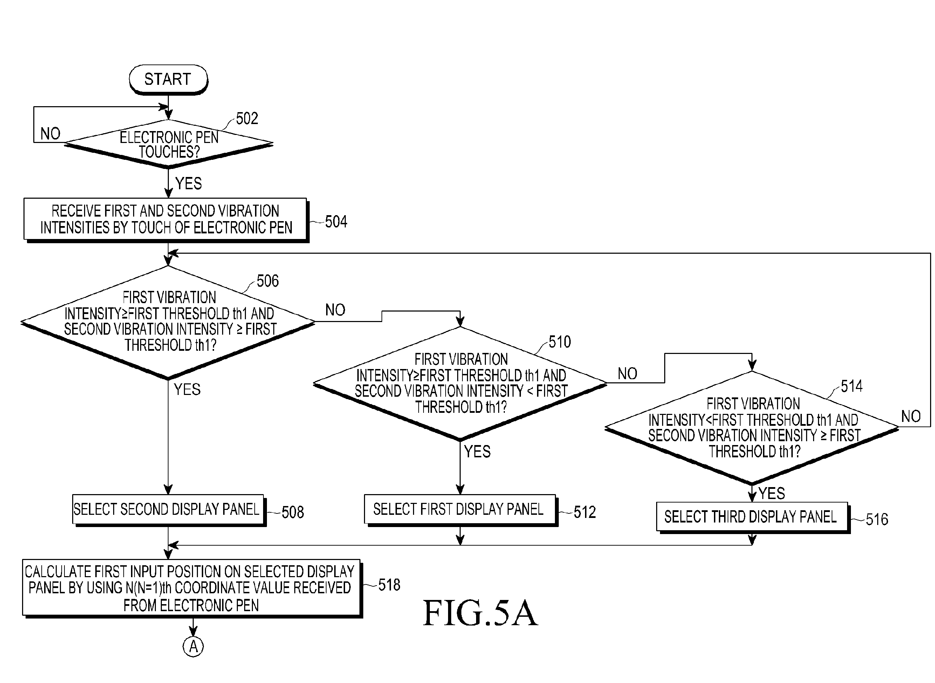

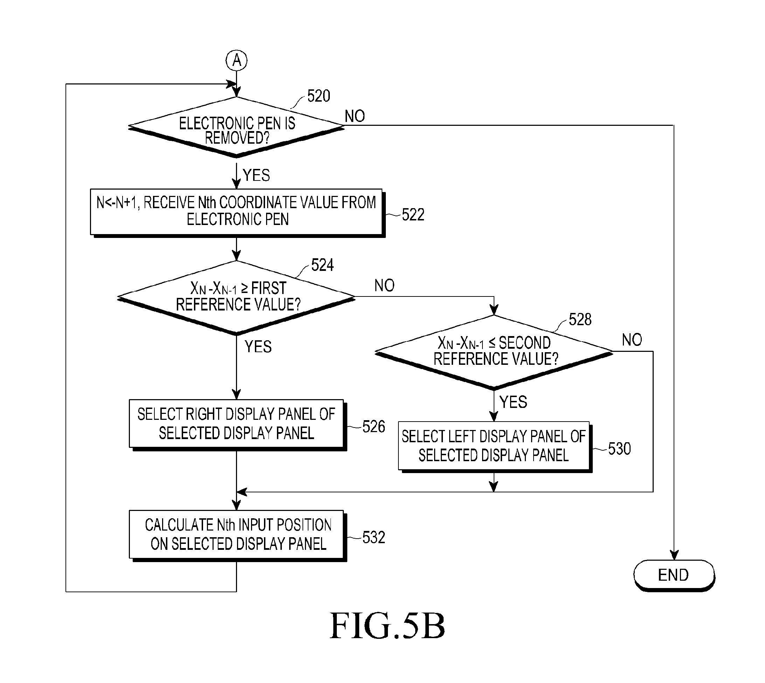

FIGs. 5A and 5B are flowcharts illustrating operations of the display device 300 including the plurality of display panels according to the first embodiment of the present invention. Referring to FIG. 5A, in step 502, the controller 310 of the display device 300 determines whether the electronic pen 200 touches the first to third display panels 301 to 303.

Each of the first to third display panels 301 to 303 detects existence or nonexistence of the touch of the electronic pen 200 according to any suitable technique (for example according to a frequency characteristic generated according to the touch of the electronic pen 200), and transmits a signal corresponding to the detection to the controller 310. The controller 310 receives the signal corresponding to the existence or nonexistence of the touch of the electronic pen 200 from the first to third display panels 301 to 303 and determines the existence or nonexistence of the touch of the electronic pen 200.

Here, each of the first to third display panels 301 to 303 detects the frequency or frequencies generated by a touch of an object. When the measured frequency or frequencies corresponds to (e.g. fall within) a frequency band or range corresponding to the touch of the electronic pen 200, each of the first to third display panels 301 to 303 detects the touch of the electronic pen 200. Further, when the electronic pen 200 touches the display panel, the frequency band corresponding to the touch of the electronic pen 200 can be predetermined by using a characteristic in which an inherent frequency by the electronic pen 200 is generated. For example, in general, when a finger or other relatively soft object touches the display panel, a low frequency is typically generated. When a relatively hard object touches the display panel, a high frequency is typically generated. In certain embodiments of the present invention, the frequency band within which fall frequencies generated when a pen tip of the electronic pen 200 touches the display panel is predetermined, and it is determined that the electronic pen 200 touches the display panel when the measured frequency corresponds to the predetermined frequency band.

When the electronic pen 200 touches the first to third display panels 301 to 303, the controller 310 receives first and second vibration intensities corresponding to vibrations generated by the touch of the electronic pen 200 from the first and second vibration sensors 332 and 334 in step 504. At this time, the first vibration sensor 332 and the second vibration sensor 334 detect the vibration generated as the electronic pen 200 touches one of the first to third display panels 301 to 303 and transmits first and second vibration intensities of the detected vibration to the controller 310. Since the first and second vibration intensities measured from the first and second vibration sensors 332 and 334 depend on (e.g. are inversely proportional to) a distance between a position (starting place) where the electronic pen 200 touches the display panel and each of the first and second vibrations sensors 332 and 334, it is possible to determine which display panel was touched by the electronic pen 200 using the first and second vibration intensities (e.g. based on the relative levels of the vibration intensities, or based on the absolute levels of the vibration intensities).

In step 506, the controller 310 determines whether each of the first and second vibration intensities is greater than or equal to a predetermined first threshold th1. The first threshold th1 may be predetermined and may correspond to a reference vibration intensity value by which it can be determined whether the electronic pen 200 touches the first to third display panels 301 to 303.

When each of the first and second vibration intensities is greater than or equal to the first predetermined threshold th1, the controller 310 identifies the second display panel 302 as a position where the electronic pen 200 touches in step 508.

When the first and second vibration intensities are not greater than or equal to the first predetermined threshold th1, the controller 310 determines whether the first vibration intensity is greater than or equal to the first predetermined threshold th1 and the second vibration intensity is less than the first predetermined threshold th1 in step 510. When the first vibration intensity is greater than or equal to the first predetermined threshold th1 and the second vibration intensity is less than the first predetermined threshold th1, the controller 310 identifies the first display panel 301 as the position where the electronic pen 200 touches in step 512.

In step 514, the controller 310 determines whether the first vibration intensity is less than the first predetermined threshold th1 and the second vibration intensity is greater than or equal to the first predetermined threshold th1. When the first vibration intensity is less than the first predetermined threshold th1 and the second vibration intensity is greater than or equal to the first predetermined threshold th1, the controller 310 identifies the third display panel 303 as the position where the electronic pen 200 touches in step 516.

Further, as described above, when the display panel touched by the electronic pen 200 is identified as one of the first to third display panels 301 to 303, the controller 310 calculates a first input position on the identified display panel by using a coordinate value (Nth coordinate value, N=1) received from the electronic pen 200 and the selected display panel in step 518.

Referring to FIG. 5B, the controller 310 determines whether the electronic pen 200 is removed from the display panel in step 520. When the electronic pen 200 is removed from the display panel, the process ends. When the electronic pen 200 is not removed from the display panel, step 522 is performed.

In step 522, the controller 310 increases N by 1 and receives an Nth coordinate value from the electronic pen 200. In step 524, the controller 310 determines whether a value X_{N} - X_{N-1}, generated by subtracting an X value of the previously received coordinate value X_{N-1} from an X value X_{N} of the currently received coordinate value, is greater than or equal to a first predetermined reference value.

The first predetermined reference value can be determined according to a resolution of the display panel. For example, if the first to third display panels 301 to 303 have the resolution of 1080 × 1920, the predetermined reference value can be 1000 in the display panel having a coordinate value ranging from (0, 0) to (1080, 1920). When each of the first to third display panels 301 to 303 has a coordinate value ranging from (0, 0) to (1080, 1920), wherein in this example the X coordinate increases when moving to the right, the coordinate value rapidly changes from 1080 to 0 as the touch pen 200 moves across a boundary between display panels in a right direction, and thus the display panel is switched.

When the value X_{N} - X_{N-1} is greater than or equal to the first predetermined reference value, the controller 310 identifies the display panel on which the electronic pen 200 is located as a right display panel (e.g. the panel located to the right of the display panel on which the electronic pen 200 was previously located) in step 526.

Conversely, when the value X_{N} - X_{N-1} is not greater than or equal to the first predetermined reference value, the controller 310 determines whether the value X_{N} - X_{N-1} is less than or equal to a second predetermined reference value in step 528.

The second predetermined reference value may have a value of, for example, 1000. When each of the first to third display panels 301 to 303 has a coordinate value ranging from (0, 0) to (1080, 1920), wherein in this example the X coordinate decreases when moving to the left, the coordinate value rapidly changes from 0 to 1080 as the touch pen 200 moves across a boundary between display panels in a left direction, and thus the display panel is switched.

When the value X_{N} - X_{N-1} is less than or equal to the second predetermined reference value, the controller 310 identifies the display panel on which the electronic pen 200 is located as a left display panel (e.g. the panel located to the left of the display panel on which the electronic pen 200 was previously located) in step 530.

Further, the controller 310 calculates an Nth input position on the selected display panel in step 532 and then returns to step 520. The controller 310 repeatedly performs steps 520 to 532 until the electronic pen is removed from the display panel.

In other embodiments in which display panels may be additionally or alternatively connected above and below each other (e.g. in the Y coordinate direction) in a multi display panel configuration, a similar process to the one described above may be carried out based on rapid changes in the Y coordinate value to identify switching between display panels in the Y coordinate direction.

According to an operation of the display device 300 as described above, when three display panels are used, the display panel on which the electronic pen 200 is located is distinguished and, therefore, identified. As a result, an accurate position is calculated.

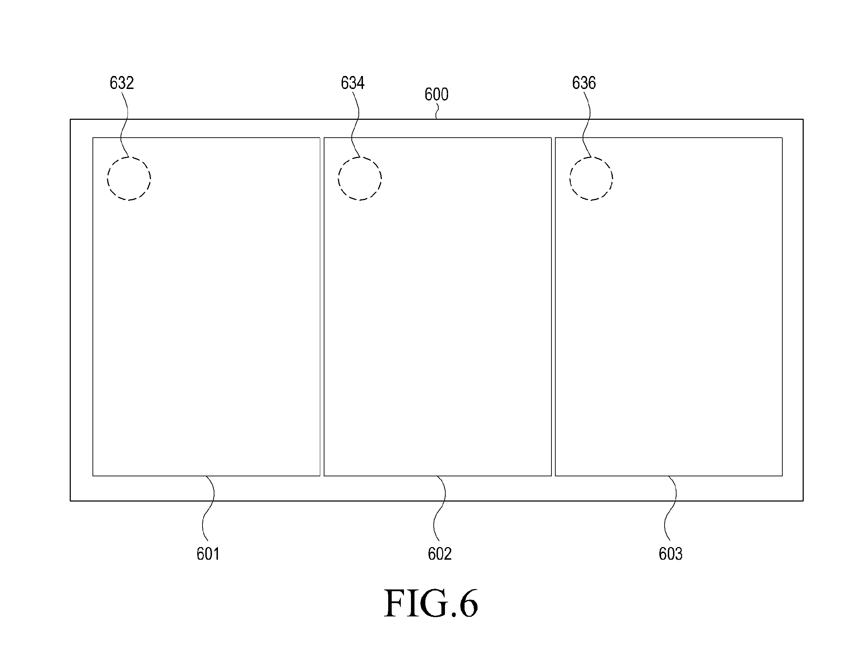

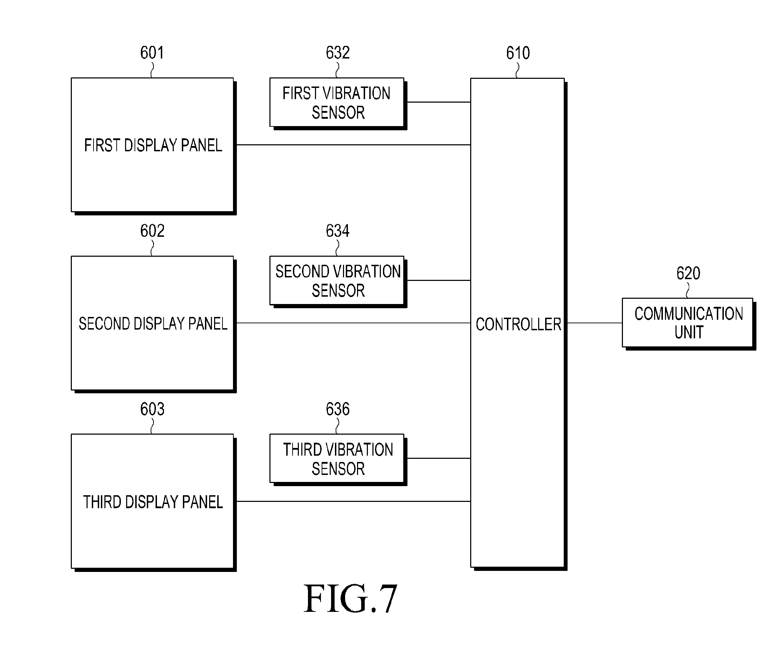

The following is a description of a display device including a plurality of display panels according to the second embodiment of the present invention. FIG. 6 is a diagram illustrating a display device 600 including a plurality of display panels according to the second embodiment of the present invention, and FIG. 7 is a diagram illustrating a configuration of the display device 600.

Referring to FIG. 6, the display device 600 according to the second embodiment of the present invention includes a plurality of display panels formed by connecting three display panels 601, 602, and 603, and vibration sensors 632, 634, and 636 attached to surfaces (e.g. rear surfaces) of the three display panels 601, 602, and 603, respectively.

Further, referring to FIG. 7, the display device 600 includes a first display panel 601, a second display panel 602, a third display panel 603, a first vibration sensor 632, a second vibration sensor 634, a third vibration sensor 636, a controller 610, and a communication unit 620.

Each of the first display panel 601, the second display panel 602, and the third display panel 603 includes a pattern (for example having a form as shown in FIG. 1), detects existence or nonexistence of the touch of the electronic pen 200 according to any suitable technique (for example according to a frequency (e.g. sound frequency) characteristic generated when the electronic pen 200 touches the display panel), and transmits the detection to the controller 610.

In this embodiment, the first vibration sensor 632, the second vibration sensor 634, and the third vibration sensor 636 are attached to upper sides of the rear surfaces of the first to third display panels 601 to 603, respectively. The first to third vibration sensors 632 to 636 detect a vibration (e.g. sound vibration) generated when the electronic pen 200 touches one of the first to third display panels 601 to 603, and transmit detected vibration intensities to the controller 610.

The controller 610 receives a signal corresponding to the existence of a touch of the electronic pen 200 from one of the first to third display panels 601 to 603 and determines the existence of the touch of the electronic pen 200. When the existence of the touch of the electronic pen 200 is determined, the controller 610 selects the display panel which the electronic pen 200 touches from the first to third display panels 601 to 603 according to the vibration intensity received from each of the first to third vibration sensors 632 to 636.

Further, the controller 610 calculates an input position on the selected display panel by using a coordinate value of the electronic pen 200 received by the communication unit 620. In addition, when the input position changes according to a drawing action of the user while the electronic pen 200 touches the display panel, the controller 610 selects the display panel on which the electronic pen 200 is located by using a change in the coordinate value (e.g. x coordinate) on a trace along which the electronic pen 200 has been moved.

The communication unit 620 may be implemented by, for example, any suitable type of wired or wireless communication module, for example a ZigBee module and the like, and may receive an input position coordinate value from the electronic pen 200. When the electronic pen 200 performs an input by touching or approaching one of the first to third display panels 601 to 603, the electronic pen 200 photographs a pattern formed in the corresponding input position and recognizes the pattern from the photographed pattern image to calculate the corresponding coordinate value. Further, the electronic pen 200 transmits the calculated coordinate value to the display device 600.

The following is a description of an operation of the display device 600 according to the second embodiment of the present invention.

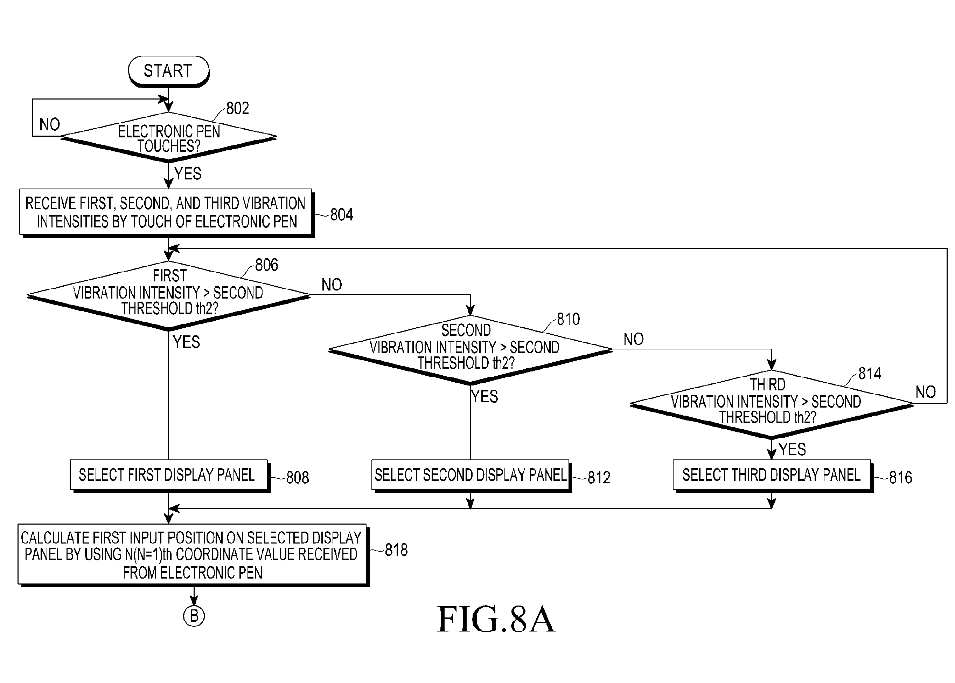

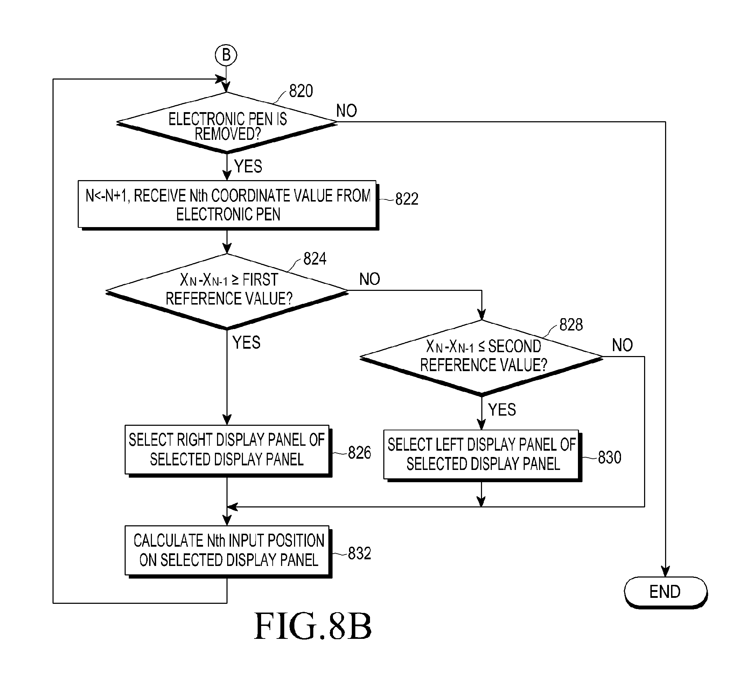

FIGs. 8A and 8B are flowcharts illustrating operations of the display device 600 according to the second embodiment of the present invention. Referring to FIG. 8A, in step 802 first, the controller 610 of the display device 600 determines whether the electronic pen 200 touches the first to third display panels 601 to 603.

Each of the first to third display panels 601 to 603 detects existence of the touch of the electronic pen 200 according to any suitable technique (for example according to a frequency characteristic generated as the existence of the touch of the electronic pen 200), and transmits a signal corresponding to the detection to the controller 610. The controller 310 receives the signal from the first to third display panels 601 to 603 to determine the existence or nonexistence of the touch of the electronic pen 200.

Here, each of the first to third display panels 601 to 603 detects a frequency or frequencies generated due to a touch of an object, and can detect the existence of the touch of the electronic pen 200 when the measured frequency corresponds to a frequency band corresponding to the touch of the electronic pen 200, for example as described above in the first embodiment. Further, when the electronic pen 200 touches the display panel, the frequency band corresponding the touch of the electronic pen 200 can be predetermined by using a characteristic in which an inherent frequency generated by the electronic pen 200 is generated.

When the electronic pen 200 touches the first to third display panels 601 to 603, the controller 610 receives first, second, and third vibration intensities corresponding to vibrations generated due to the touch of the electronic pen 200 from the first to third vibration sensors 632, 634, and 636 in step 804. The first to third vibration sensors 632, 634, and 636 detect a vibration generated as the electronic pen 200 touches one of the first to third display panels 601 to 603 and transmits first, second, and third vibration intensities of the detected vibration to the controller 610. At this time, when a vibration is not transferred among certain ones of the first to third display panels 601 to 603, it is possible to identify the display panel touched by the electronic pen 200 by using the first to third vibration intensities measured by the first to third vibration sensors 632, 634, and 636, respectively.

Accordingly, the controller 610 determines whether a first vibration intensity is greater than a second predetermined threshold th2 in step 806. The second predetermined threshold th2 can be predetermined as a reference vibration intensity value by which it can be determined whether the electronic pen 200 touches the first to third display panels 601 to 603. When the first vibration intensity is greater than the second predetermined threshold th2, the controller 610 identifies the first display panel 601 as a position where the electronic pen 200 touches in step 808.

In step 810, when the first vibration intensity is not greater than the second predetermined threshold th2, the controller 610 determines whether a second vibration intensity is greater than the second predetermined threshold th2. When the second vibration intensity is greater than the second predetermined threshold th2, the controller 610 identifies the second display panel 602 as a position where the electronic pen 200 touches in step 812.

In step 814, when the second vibration intensity is not greater than the second predetermined threshold th2, the controller 610 determines whether a third vibration intensity is greater than the second predetermined threshold th2. When the second vibration intensity is greater than the second predetermined threshold th2, the controller 610 identifies the third display panel 603 as a position where the electronic pen 200 touches in step 816.

As described above, when the display panel touched by the electronic pen 200 is identified as one of the first to third display panels 601 to 603, the controller 610 calculates a first input position on the selected display panel by using the coordinate value (Nth coordinate value, N=1) received from the electronic pen 200 and the identified display panel in step 818.

Referring to FIG. 8B, the controller 610 determines whether the electronic pen 200 is removed from the display panel in step 820. When the electronic pen 200 is removed from the display panel, the process ends. When the electronic pen 200 is not removed from the display panel, step 822 is performed.

In step 822, the controller 610 increases an N value by 1 and receives an Nth coordinate value from the electronic pen 200. In step 824, the controller 610 determines whether a value X_{N} - X_{N-1}, generated by subtracting an X value X_{N-1} of the previously received coordinate value from an X value X_{N} of the currently received coordinate value, is greater than or equal to a first predetermined reference value.

The first predetermined reference value may be determined according to a resolution of the display panel. For example, if the first to third display panels 601 to 603 have a resolution of 1080 × 1920, the first predetermined reference value may have a value of, for example, 1000 in the display panel having a coordinate value ranging from (0, 0) to (1080, 1920). When each of the first to third display panels 601 to 603 has a coordinate value ranging from (0, 0) to (1080, 1920), wherein in this example the X coordinate increases when moving to the right, the coordinate value rapidly changes from 1080 to 0 as the touch pen 200 moves across a boundary between display panels in a right direction and thus the display panel is switched.

When the value X_{N} - X_{N-1} is greater than or equal to the first predetermined reference value, the controller 610 identifies the display panel on which the electronic pen 200 is located as a right display panel (e.g. the panel located to the right of the display panel on which the electronic pen 200 was previously located) in step 826.

In step 828, when the value X_{N} - X_{N-1} is not greater than or equal to the first predetermined reference value, the controller 610 determines whether the value X_{N} - X_{N-1} is less than a second predetermined reference value.

The second predetermined reference value may have a value of, for example, 1000. When each of the first to third display panels 601 to 603 has a coordinate value ranging from (0, 0) to (1080, 1920), wherein in this example the X coordinate decreases when moving to the left, the coordinate value rapidly changes from 0 to 1080 as the touch pen 200 moves across a boundary between display panels in a left direction and thus the display panel is switched.

When the value X_{N} - X_{N-1} is less than the second predetermined reference value, the controller 610 identifies the display panel on which the electronic pen 200 is located as a left display panel (e.g. the panel located to the left of the display panel on which the electronic pen 200 was previously located) in step 830.

Further, the controller 610 calculates an Nth input position on the selected display panel in step 832 and then returns to step 820. The controller 610 repeatedly performs steps 520 to 532 until the electronic pen is removed from the display panel.

In other embodiments in which display panels may be additionally or alternatively connected above and below each other (e.g. in the Y coordinate direction) in a multi display panel configuration, a similar process to the one described above may be carried out based on rapid changes in the Y coordinate value to identify switching between display panels in the Y coordinate direction.

According to an operation of the display device 600 including the plurality of display panels according to the second embodiment of the present invention as described above, when three display panels are used, the display panel on which the electronic pen 200 is located can be selected by using the three vibration sensors attached to the display panels and thus an accurate position of the electronic pen 200 can be calculated.

According to various embodiments of the present invention, a display panel into which an input made by an electronic pen is detected can be identified using vibration intensity, so that input position detection using pattern recognition can be applied, even when a plurality of display panels are used.

Further, according to various embodiments of the present invention, when a position of an input made by a drawing action of an electronic pen moves from a first display panel to a second display panel, the change of display panel receiving the input can be identified, so that position detection using pattern recognition can be applied, even when a plurality of display panels are used.

In addition, according to various embodiments of the present invention, a display panel on which an input is performed using an electronic pen can be distinguished by using relatively cheap vibration sensors and a relatively simple algorithm, so that the implementation of a display device including the multiple display panels is feasible and economical.

It will be appreciated that embodiments of the present invention can be realized in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although certain exemplary embodiments of the present invention have been discussed in the above detailed description, the skilled person will understand that various modifications can be made without departing from the scope of the present invention, as defined by the claims.

For example, certain embodiments of the present invention have been described in which there are three display panels. However, the number of display panels is not limited to any particular numbers; in general, one or more display panels may be used in various embodiments of the present invention. In various embodiments, the display panels may be provided in any suitable or desired physical configuration or arrangement, for example by connecting the display panels in horizontal and/or vertical directions. Further, embodiments of the present invention have been described in which there are two or three vibration sensors. However, the number of vibration sensors is not limited to any particular number; in general, the number of vibration sensors may vary. Any suitable arrangement of vibration sensors for distinguishing the display panel touched by the electronic pen may be provided.

Although the above embodiments have described as using pattern recognition techniques to determine the position of a touch applied to an individual display panel, the skilled person will appreciate that the present invention is not limited to embodiments using pattern recognition. For example, the present invention may be advantageously applied in cases where other techniques are used to determine the position of a touch applied to an individual display panel. For example, the position of a touch with respect to an overall display area formed from a plurality of individual display panels may be determined by a combination of: (i) a determination of which of the display panels is touched; and (ii) a determination of the position of the touch with respect to the touched individual display panel.

Accordingly, the scope of the present invention is not limited to the exemplary embodiments described above, but is defined by the appended claims.

In summary, the foregoing description describes exemplary embodiments of the present invention and is not used for limiting the scope of the invention. For example, various modifications, equivalent substitutions, and/or improvement may be made therein without departing from the scope of the present invention, as defined by the following claims.

## Claims

1. A display device, comprising:
a plurality of display panels;
one or more vibration sensors for detecting a vibration corresponding to a touch of an input device, the vibration sensors being attached to the plurality of display panels; and
a controller for identifying, when one of the plurality of display panels is touched by the input device, the display panel touched by the input device from the plurality of display panels according to vibration intensities detected by the one or more vibrations sensors.

2. The display device of claim 1, further comprising a communication unit for receiving, from the input device, a coordinate value calculated according to recognition of a pattern in an area touched by the input device.

3. The display device of claim 2, wherein the controller is configured for calculating or determining an input position of the input device by using the coordinate value received from the input device and the selected display panel.

4. The display device of claim 2 or 3, wherein, when the coordinate value received from the input device changes, the controller is configured for identifying a display panel touched by the input device by using a change in the coordinate value.

5. The display device of any preceding claim, wherein the plurality of display panels are configured by connecting three or more display panels, and wherein the one or more vibration sensors comprise two or more vibration sensors, which are attached to a first surface of a center display panel of the three or more display panels.

6. The display device of any preceding claim, wherein the plurality of display panels are configured by connecting two or more display panels, and the one or more vibration sensors comprise two or more vibration sensors, which are attached to first surfaces of the two or more display panels, respectively.

7. The display device of claims 5 or 6, wherein the first surface comprises a rear surface.

8. The display device of any preceding claim, wherein the controller is configured for identifying an input position of the input device with respect to the identified display panel.

9. The display device of claim 8, wherein the controller is configured for determining an input position of the input device using: (i) the identified input position of the input device with respect to the identified display panel; and (ii) the identified display panel.

10. A display system comprising:
a display device according to any preceding claim; and
an input device for calculating a coordinate value of a touch made by the input device on a display panel of the display device, wherein the coordinate value is calculated according to recognition of a pattern in an area of the display panel touched by the input device.

11. A system according to claim 10, wherein the input device comprises:
an image capturing unit for capturing an image of the area of the display panel touched by the input device comprising the pattern;
a processor for calculating the coordinate value by analyzing the image captured by the image capturing unit, decoding the pattern in the captured image, and extracting position image encoded in the pattern; and
a communication unit for transmitting the coordinate value to the display device.

12. A display method using a plurality of display panels, the display method comprising the steps of:
detecting whether an input device touches one of the plurality of display panels;
receiving vibration intensities detected by one or more vibration sensors when the input device touches one of the plurality of display panels; and
identifying the display panel touched by the input device from the plurality of display panels according to the received vibration intensities.

13. The display method of claim 12, further comprising the step of receiving, from the input device, a coordinate value calculated according to recognition of a pattern in an area touched by the input device.

14. The display method of claim 13, further comprising the step of calculating or determining an input position of the input device by using the coordinate value received from the input device and the selected display panel.

15. The display method of claim 13 or 14, further comprising the step of, when the coordinate value received from the input device changes, identifying a display panel touched by the input device by using a change in the coordinate value.
